# EUROPEAN PATENT SPECIFICATION

(11) **EP 2 671 784 B1**
(45) Date of publication and mention of the grant of the patent: **13.07.2016**
(21) Application number: 13161071.9
(22) Date of filing: 26.03.2013
(51) Int. Cl.: B62D 35/00

(54) **Apparatus for reducing vehicle aerodynamic drag**
Vorrichtung zur Reduzierung des aerodynamischen Widerstands eines Fahrzeugs
Appareil pour réduire la traînée aérodynamique d'un véhicule

(30) Priority: 04.06.2012 JP 2012127366
(43) Date of publication of application: 11.12.2013
(73) Proprietor: Honda Motor Co., Ltd., Tokyo 107-8556 (JP)
(72) Inventor: Hoshino, Gensuke, Saitama, 351-0193 (JP); Yanaka, Makoto, Saitama, 351-0193 (JP)
(74) Representative: Weickmann & Weickmann PartmbB

(56) References cited:
- EP-A1- 1 623 922
- EP-A1- 2 266 867
- WO-A2-2011/004124
- DE-A1-102008 047 488
- DE-A1-102008 060 257
- FR-A1- 2 890 637
- JP-A- H09 118 270
- JP-U- S60 188 684
- US-A- 4 102 548
- US-A1- 2007 257 512
- US-B1- 6 378 932

## Description

This invention relates to an apparatus for reducing vehicle aerodynamic drag, more specifically to an apparatus that reduces the aerodynamic drag of a vehicle by using a synthetic jet actuator to control airflow along the vehicle body.

One example of an apparatus that reduces vehicle aerodynamic drag by using a synthetic jet actuator to control the airflow along the vehicle body is taught, for example, by JP 09 (1997)-118270. In the configuration according to the described technology, a synthetic jet actuator installed at the bottom of the vehicle body periodically drives oscillators connected to diaphragms (vibrating membranes) deployed in a cavity to vibrate the diaphragms and jet/suck air through orifices in the cavity. The separation point of the boundary layer formed on the body wall surface is said to be therefore shifted downstream to reduce the aerodynamic drag on the vehicle body.

More exactly, in the configuration according to the technology of the reference, the orifices of the synthetic jet actuator are positioned to jet air perpendicular to the direction of the airflow along the vehicle body.

As pointed out above, the configuration according to the technology of JP 09 (1997)-118270 directs the air jetted from the actuator orifices perpendicular to the direction of the airflow along the vehicle body. To the extent of the inventors' knowledge, however, no aerodynamic drag reducing effect by jetting air perpendicular to the direction of airflow has been observed. Moreover, it has been found that reduction of aerodynamic drag on a blunt object like a vehicle body cannot be achieved merely by shifting the separation point downstream but further requires inhibition of body slipstream variance.

In DE 10 2008 060 257 A1, on which the preamble of claim 1 is based, the orifice opens in the vertical step surface part of the vehicle body. A rounded surface part continues from the lower end of the vertical wall surface in which the orifice opens, so that, in sectional view, the orifice opens into a step part formed in the outer wall of the vehicle body.

Although FR 28 90 637 A shows rounded surface portions of a vehicle body (front and rear pillars) provided with jet openings of synthetic air jet actuators, the jetting direction is perpendicular to the wall surface and the air pulse is perpendicular to the air flow.

In US 6 378 932 B1, the periodic pivot movement and the amplitude of a rigid rear spoiler is adjusted based on road speed (travelling speed).

EP 1 623 922 A1 shows micro-jet arrays for an aircraft without a membrane, and the jetting direction of the micro-jet flow extends obliquely with an inclination angle relative to the general air flow direction. Orifices open in an oblique angle into the front edge portion of an aircraft wing near the leading edge thereof.

DE 10 2008 047 488 A1 shows a diffuser construction on the rear lower part of the vehicle body provided with a synthetic jet supplying a pulsed air stream. The jet orifices open perpendicularly to the air stream within the diffuser.

EP 2 266 867 A1 shows a pulse air stream perpendicular to the horizontal air flow direction.

The object of this invention is therefore to solve the aforesaid problem by providing an apparatus for reducing vehicle aerodynamic drag which reduces aerodynamic drag acting on a vehicle body by using a synthetic jet actuator to control airflow along the vehicle body (boundary layer formed on the body wall surface) and also inhibit vehicle slipstream variance.

In order to achieve the object, this invention provides in a first aspect an apparatus for reducing vehicle aerodynamic drag in accordance with claim 1.

In order to achieve the object, this invention provides in a second aspect a method for reducing vehicle aerodynamic drag in accordance with claim 4.
FIG. 1 is an overall schematic diagram showing the apparatus for reducing vehicle aerodynamic drag according to an embodiment of this invention;
FIG. 2 is an explanatory diagram of a test unit for verifying the effect of the apparatus of FIG. 1;
FIG. 3 is a data diagram showing how back pressure coefficient varied with drive frequency of the speaker oscillators of the test unit shown in FIG. 2 when measured at a wind speed of 30 m/s;
FIG. 4 is an explanatory diagram showing the results of numerically analyzing the apparatus of FIG.1 effect;
FIG. 5 is an explanatory diagram showing the back pressure coefficients Cp at drive frequency of 350 Hz of FIG. 3 measured at different heights;
FIG. 6 is an explanatory diagram showing the back pressure coefficients Cp at drive frequency of 250 Hz of FIG. 3 measured at different heights;
FIG. 7 is an explanatory diagram showing the operation of a control unit of FIG. 1;
FIG. 8 is an explanatory diagram showing the effect of the apparatus;
FIG. 9 is a set of explanatory diagrams showing the configurations and other aspects of synthetic jet actuator orifices.

An embodiment for implementing the apparatus for reducing vehicle aerodynamic drag according to this invention is explained with reference to the attached drawing in the following.

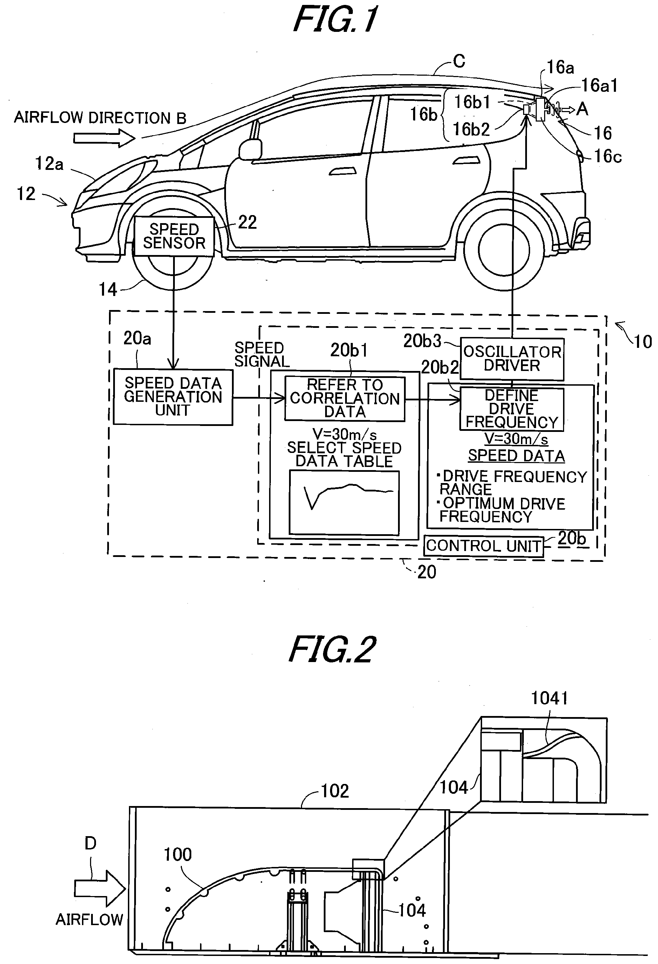

FIG. 1 is an overall schematic diagram showing the apparatus for reducing vehicle aerodynamic drag according to an embodiment of this invention.

The apparatus is designated by symbol 10 in FIG. 1. The apparatus 10 is equipped with a synthetic jet actuator (sometimes called "SJ actuator" in the following) 16 that is mounted on a body 12a of a vehicle 12.

The vehicle 12 is a hatchback passenger car like that shown in the drawing. A motor (not shown) that comprises of an engine (internal combustion engine), an electric motor or a hybrid thereof is installed in the front end of the body 12a. The driving force of the motor is applied to drive wheels 14 to propel the car. The SJ actuator 16 is mounted inside a luggage compartment (not shown) at the rear end of the body 12a.

FIG. 1 shows a schematic sectional view of the SJ actuator 16. The SJ actuator 16 has a case 16a. The case 16a is of box-like shape comprising a top face, bottom face, a front face, side faces on opposite ends in the car width direction, and a rear face. The size of the case 16a is about 100 cm in the car width direction length, 25 cm in gravity direction height, and 20 cm in car longitudinal direction length.

Four speakers (only one shown) 16b are arranged in the car width direction on the front surface of the case 16a, and a cavity 16c is formed inside the case 16a. The speakers 16b are of known structure each comprising a cone-shaped diaphragm (vibrating membrane) 16b1 and an oscillator (magnetic circuit unit) 16b2 comprising a magnet or the like connected to the diaphragm 16b1.

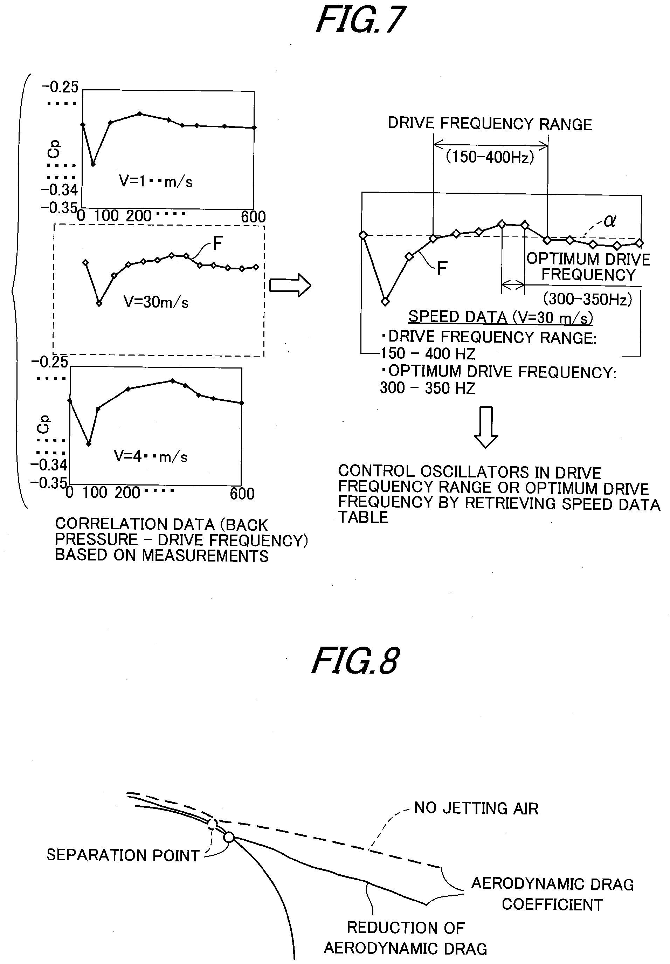

Four 1-mm-diameter orifices (only one shown) 16a1 are formed in the rear face of the case 16a in correspondence to the number of speakers 16b. As illustrated, the orifices 16a1 formed in the case 16a of the SJ actuator 16 are oriented to direct the jetting direction A of air jetted from the orifices 16a1 parallel to the flow direction B of air flowing along the body 12a when the vehicle 12 is traveling and are positioned in the vicinity of the separation point (discussed later with reference to FIG. 8) of the boundary layer formed on the wall surface of the body 12a by airflow C. It should be noted that the position of the separation point is suitably estimated (measured) by experiment beforehand with consideration to the shape of the body 12a and the assumed travel speed of the vehicle 12. In FIG. 1, the diameter of the orifice 16a1 is exaggerated for clarity.

An ECU (Electronic Control Unit) 20 incorporating a microcomputer comprising a CPU, ROM, RAM, I/O and other components is installed near the driver's seat or at some other convenient location in the vehicle 12. As shown at the bottom of FIG. 1, the ECU 20 functions as a speed data generation unit 20a and a control unit 20b.

A speed sensor 22 installed near the driveshaft (not shown) of the drive wheels 14 outputs a pulse signal to the speed data generation unit 20a of the ECU 20 once every predetermined angle of rotation of the driveshaft. The speed data generation unit 20a measures the time interval between the output pulses, produces a speed signal indicating the travel speed of the vehicle 12, and outputs it to the control unit 20b.

The control unit 20b is equipped with a correlation data reference unit 20b1, a drive frequency determining unit 20b2 and an oscillator driver 20b3. The data reference unit 20b1 and drive frequency determining unit 20b2 determine the drive frequency of the oscillators 16b2 of the speakers 16b based on the travel speed of the vehicle 12, and the oscillators 16b2 are driven by the oscillator driver 20b3 based on the determined drive frequency (at the determined drive frequency). The oscillator driver 20b3 is equipped with an amplifier.

The foregoing will be explained with reference to FIG. 2.

FIG. 2 is an explanatory diagram of a test unit 100 used to verify the effect of the apparatus 10 of FIG. 1. The test unit 100 is a vehicle body model scaled to about 1/10th the body 12a of the vehicle 12. It was placed inside a wind tunnel 102 and exposed to air blown in direction of arrow D. The test unit 100 has a case 104 with an orifice 1041 formed in an S-like shape so that the jetting direction of air jetted from the orifice 1041 is parallel to the airflow direction D along the test unit 100.

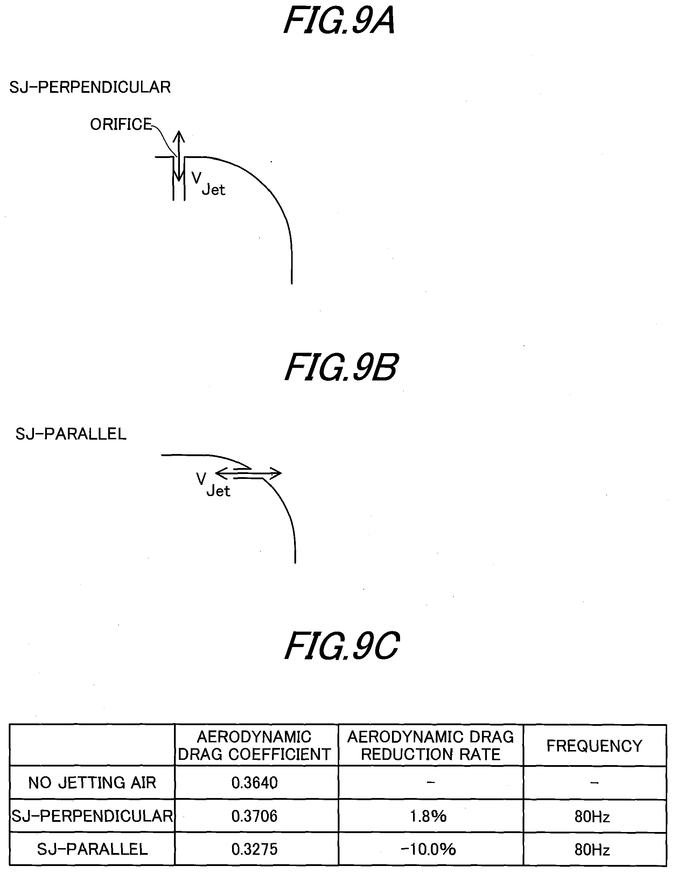

Through assiduous testing using the test unit 100 shown in FIG. 2, the inventors discovered that, as will be explained later with reference to FIG. 9, no aerodynamic drag reducing effect was observed with a configuration which, like that of the technology described in the reference, orients the jetting direction of air from the orifice of the SJ actuator perpendicular to the direction of airflow along the vehicle body, and further discovered that reduction of aerodynamic drag on a blunt object like the body 12a shown in FIG. 1 cannot be achieved merely by shifting the separation point downstream but further requires the airflow C to be controlled so as to inhibit variance of the slipstream of the body 12a.

Therefore, as shown in FIG. 1, this embodiment is aimed at providing an apparatus for reducing vehicle aerodynamic drag 10 which uses an SJ actuator to control the airflow C along the body 12a (the boundary layer formed on the body wall surface) so as to shift the separation point downstream and also inhibit variance of the slipstream of the body 12a, thereby reducing the aerodynamic drag acting on the body 12a.

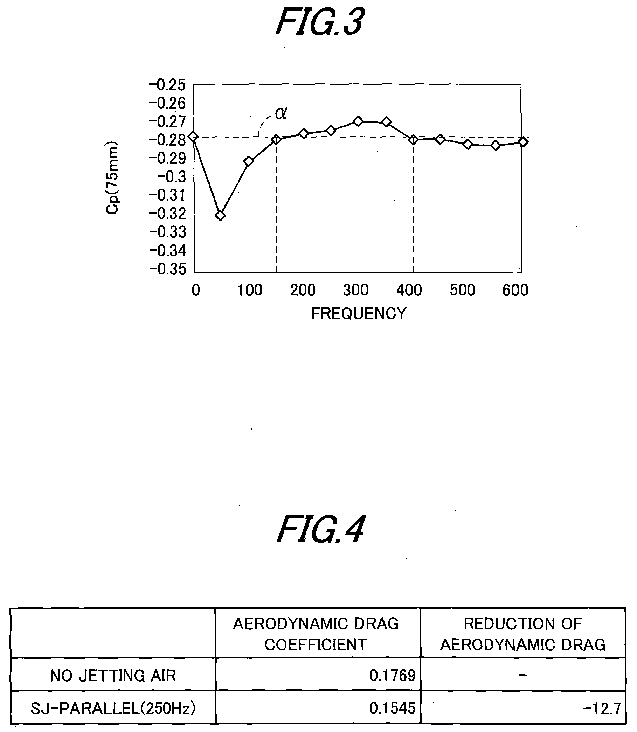

Now follows an explanation regarding reduction of aerodynamic drag on the body 12a, specifically, increase of back pressure (air pressure downstream of the body 12a). In order to ascertain the relationship between the drive frequency of the oscillators 16b2 of the speakers 16b and variance of the body 12a slipstream, the test unit 100 shown in FIG. 2 was used to measure back pressure with frequency as a parameter. FIG. 3 shows the measurement results when the wind speed was 30 m/s (equivalent to 108 km/h). In FIG. 3, Cp represents a non-dimensional value (back pressure coefficient) obtained by dividing the measured back pressure by the inlet dynamic pressure of the air blown into the wind tunnel 102. It is the value measured at a height of 75 mm above ground.

Threshold value α in FIG. 3 indicates the value when the aerodynamic drag reduction control according to this embodiment is not conducted. As can be seen from FIG. 3, in the region of low drive frequency, the back pressure (back pressure coefficient Cp) is low, meaning that the aerodynamic drag is high, but as the drive frequency rises, the back pressure increases, meaning that the aerodynamic drag decreases.

More specifically, in the drive frequency range of 150 to 400 Hz, the back pressure coefficient Cp rises above the threshold value α and is highest (best) between 300 and 350 Hz. In the case of the test unit 100 shown in FIG. 2, it was found, for example, that driving the oscillators 16b2 at a frequency of 250 Hz enabled a 12 percent reduction of aerodynamic drag, as indicated in FIG. 4. The shown characteristics are suitably measured by experiment beforehand for the respective speeds and stored in the ROM of the ECU 20.

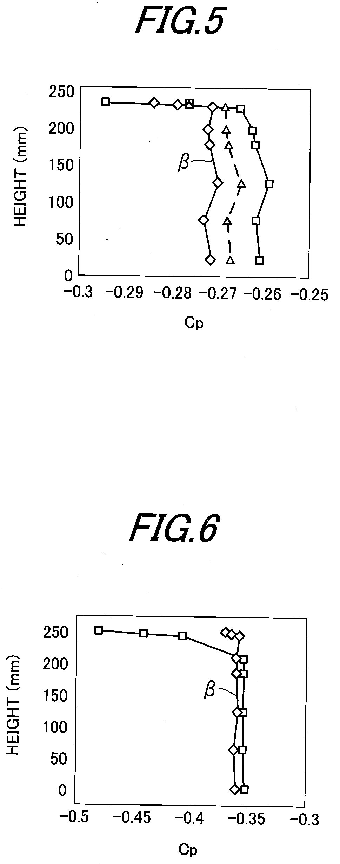

FIG. 5 is an explanatory diagram showing the back pressure coefficients Cp measured at different heights at a drive frequency of 350 Hz. In the drawing, the solid lines are for the case of driving the oscillators 16b2 at 4.0 W and the broken line for the case of driving the oscillators 16b2 at 3.8 W. Line β shows the values when the aerodynamic drag reduction control according to this embodiment was not conducted. FIG. 6 is a similar explanatory diagram showing the back pressure coefficients Cp measured at different heights at a drive frequency of 250 Hz. In the drawing, the solid lines are for the case of driving the oscillators 16b2 at 12.8 W. FIG. 7 is an explanatory diagram showing the operation of the control unit control unit 20b of this embodiment.

Returning to FIG. 1 and continuing the explanation against the foregoing backdrop, when the speed signal in the control unit 20b indicates 30 m/s (108 km/h), for example, the data of the characteristic curve F shown in FIG. 7 corresponding to that speed are accessed (the speed data table is selected (retrieved) from the ROM). The drive frequency determining unit 20b2 then selects a given value between 150 and 400 Hz at which the back pressure coefficient Cp of the characteristic curve F is equal to or greater than the threshold value α (predetermined pressure), more exactly selects a given value from within the optimum drive frequency range of 300 to 350 Hz of the characteristic curve F shown in FIG. 7, and thereafter defines the selected value as the drive frequency of the oscillators 16b2.

Although the characteristic curve F of FIG. 7 in the foregoing is for the values when the speed signal indicates 30 m/s (108 km/h), characteristic curves are similarly predetermined with respect to other speeds and the data are retrievably stored (made available for reference) in the ROM of the ECU 20.

FIG. 8 is an explanatory diagram showing the effect obtained by applying the apparatus for reducing aerodynamic drag according to the embodiment of this invention. In the drawing, the solid line shows the flow line (airflow) and concurrent separation point in the case of using the actuator to jet air parallel to the direction of the airflow along the vehicle body (SJ-Parallel), and the broken line shows the flow line and concurrent separation point in the case where no air is jetted using an actuator. As indicated in the drawing, when the apparatus for reducing aerodynamic drag according to this embodiment of the invention is applied to jet air from the orifices 16a1 of the actuator, the separation point of the boundary layer formed on the body wall surface is effectively shifted downstream.

As stated above, the embodiment of this invention is configured to have an apparatus (and method) for reducing vehicle aerodynamic drag having a synthetic jet actuator (16) installed at a vehicle (12) that periodically drives an oscillator (16b2) connected to a diaphragm (16b1) deployed in a cavity (16c) to vibrate the diaphragm and jets/sucks air through an orifice (16a1) in the cavity, characterized by: the orifice positioned to align a jetting direction of the air jetted from the orifice of the actuator parallel to a direction of airflow along a vehicle body (12a); a drive frequency determiner (20b2) that determines a drive frequency of the oscillator of the actuator based on at least a travel speed of the vehicle; and a oscillator driver (20b3) that drives the oscillator of the actuator based on the determined drive frequency.

With this, the separation point of the boundary layer formed on the body wall surface during vehicle travel can be effectively shifted downstream and variance of the slipstream formed behind the body can be inhibited. Aerodynamic drag on the vehicle body can therefore be diminished.

FIG. 9A is an explanatory diagram schematically showing a configuration (SJ-Perpendicular) in the case where, as in the technology described in Patent Document 1, the orifices 16a1 of the synthetic jet actuator 16 are positioned to align the jetting direction of the air jetted from the orifices 16a1 of the actuator 16 perpendicular to the airflow along the vehicle body 12a. FIG. 9B is an explanatory diagram schematically showing a configuration (SJ-Parallel) in the case where, as indicated in the embodiment of this invention, the orifices 16a1 of the actuator 16 are positioned to align the jetting direction of the air jetted from the orifices 16a1 of the actuator 16 parallel to the airflow along the vehicle body 12a1. FIG. 9C shows data summarizing results obtained by applying numerical analysis to compare these configurations with the case where no air is jetted using a synthetic jet actuator 16. It is noted that the data shown in FIG. 9C indicate the case where the oscillator 16b2 of the synthetic jet actuator 16 is operated at a drive frequency of 80 Hz.

From FIG. 9C it can be seen that the technology taught by the reference shown in FIG. 9A does not display an effect of reducing the aerodynamic drag acting on the vehicle body 12a as compared with the case of not jetting air with a synthetic jet actuator 16, while the embodiment of this invention shown in FIG. 9B achieves a 10 percent reduction of aerodynamic drag as compared with the case of not jetting air.

Further, since the drive frequency of the oscillator 16b2 is predetermined based on at least the travel speed of the vehicle 12 and the oscillator 16b2 is driven based on the determined drive frequency, as explained above with reference to FIGs. 3 to 6, body slipstream variance is inhibited to reduce the aerodynamic drag acting on the vehicle body more effectively.

In the apparatus (and method), the drive frequency determiner determines the drive frequency of the oscillator (16b2) of the actuator (16) by retrieving a characteristic (F) for the drive frequency of the oscillator of the actuator predetermined corresponding to the travel speed of the vehicle. With this, in addition to the foregoing effects, it also becomes possible to determine the drive frequency simply and precisely.

In the apparatus (and method), since the characteristic (F) for the drive frequency of the oscillator (16b2) is predetermined based on the travel speed of the vehicle (12) and aerodynamic drag on the vehicle, in addition to the foregoing effects, it becomes possible to determine the drive frequency more simply and more precisely.

In the apparatus (and method), since the orifice (16b2) of the actuator (16) is positioned in vicinity of a separation point of a boundary layer formed on a wall surface of the vehicle body (12a), it becomes possible to efficiently jet air into the boundary layer, i.e., efficiently supply energy, so that the separation point can be shifted downstream more effectively.

Although the foregoing description assumes that speaker diaphragms are used as the diaphragms (vibrating membranes) of the SJ actuator, piezoelectric diaphragms (vibrating membranes) can be adopted instead.

Although the embodiment was explained taking a hatchback passenger car as an example of the vehicle 12, the vehicle is not limited to this shape and the vehicle can instead be, for example, a sedan, minivan or other model passenger car.

Although the size of the case 16a, number of speakers 16b and other constituents of the SJ actuator 16 were concretely specified, these are merely non-limitative examples.

In a apparatus for reducing vehicle aerodynamic drag having a synthetic jet actuator (16) installed at a vehicle (12) that periodically drives an oscillator (16b2) connected to a diaphragm (16b1) to vibrate the diaphragm and jets/sucks air through an orifice (16a1), the orifice is positioned so that a jetting direction of the air jetted from the orifice of the actuator is parallel to a direction of airflow along a vehicle body (12a), a drive frequency of the oscillator is determined based on at least a travel speed of the vehicle, and the oscillator is driven based on the determined frequency.

## Claims

1. An apparatus (10) for reducing vehicle aerodynamic drag having
a synthetic jet actuator (16) installed at a vehicle (12) and that periodically drives an oscillator (16b2) connected to a diaphragm (16b1) deployed in a cavity (16c) to vibrate the diaphragm and to jet/suck air through an orifice (16a1) in the cavity, wherein
the orifice (16a1) of the actuator (16) is positioned to align a jetting direction of the air jetted from the orifice (16a1) in parallel to the direction of airflow (B) along a vehicle body (12a);
a drive frequency determiner (20b2) that determines a drive frequency of the oscillator of the actuator based on at least a travel speed of the vehicle; and
a oscillator driver (20b3) that drives the oscillator of the actuator based on the determined drive frequency,
**characterized in that**
the orifice (16a1) of the actuator (16) is positioned downstream and in vicinity of a separation point of a boundary layer (C) formed on a rounded wall surface of the vehicle body (12a), and the orifice (16a1) opens into this rounded wall surface of the vehicle body (12a) to form an acute angle therewith.

2. The apparatus according to claim 1, wherein the drive frequency determiner determines the drive frequency of the oscillator of the actuator by retrieving a characteristic (F) for the drive frequency of the oscillator of the actuator predetermined corresponding to the travel speed of the vehicle.

3. The apparatus according to claim 2, wherein the characteristic for the drive frequency of the oscillator is predetermined based on the travel speed of the vehicle and aerodynamic drag on the vehicle.

4. A method for reducing vehicle aerodynamic drag of a vehicle (12) having an apparatus in accordance with claim 1, wherein the method comprises the steps of:
determining a drive frequency of the oscillator of the actuator based on at least a travel speed of the vehicle (12a);
driving the oscillator of the actuator based on the determined drive frequency, and
jetting the air from the orifice (16a1) of the actuator (16) downstream and in vicinity of the separation point of the boundary layer (C).

5. The method according to claim 4, wherein the step of determining determines the drive frequency of the oscillator of the actuator by retrieving a characteristic for the drive frequency of the oscillator of the actuator predetermined corresponding to the travel speed of the vehicle.

6. The method according to claim 5, wherein the characteristic for the drive frequency of the oscillator is predetermined based on the travel speed of the vehicle and aerodynamic drag on the vehicle.

## Patentansprüche

1. Vorrichtung (10) zum Reduzieren vom Luftwiderstand eines Fahrzeugs, welche aufweist:
einen Synthetischer-Strahl-Aktuator (16), der an einem Fahrzeug (12) angebracht ist und der einen Oszillator (16b2) periodisch antreibt, der mit einer in einem Hohlraum (16c) gespreizten Membran (16b1) verbunden ist, und die Membran in Schwingung zu versetzen und Luft durch eine Öffnung (16a1) in dem Hohlraum auszustoßen/zu saugen, wobei
die Öffnung (16a1) des Aktuators (16) so angeordnet ist, dass sie mit einer Strahlrichtung der aus der Öffnung (16a1) ausgestoßenen Luft parallel zur Luftströmungsrichtung (B) entlang einer Fahrzeugkarosserie (12a) fluchtet;
einen Antriebsfrequenzbestimmer (20b2), der eine Antriebsfrequenz des Oszillators des Aktuators basierend auf zumindest einer Fahrgeschwindigkeit des Fahrzeugs bestimmt; und
einen Oszillatortreiber (20b3), der den Oszillator des Aktuators basierend auf der bestimmten Antriebsfrequenz antreibt,
**dadurch gekennzeichnet, dass** die Öffnung (16a1) des Aktuators (16) stromab und in der Nähe eines Ablösungspunkts einer Grenzschicht (C) angeordnet ist, der auf einer abgerundeten Wandoberfläche der Fahrzeugkarosserie (12a) ausgebildet ist, und sich die Öffnung (16a1) in diese gerundete Wandoberfläche der Fahrzeugkarosserie (12a) öffnet, um damit einen spitzen Winkel zu bilden.

2. Die Vorrichtung nach Anspruch 1, wobei der Antriebsfrequenzbestimmer die Antriebsfrequenz des Oszillators des Aktuators bestimmt, indem er eine Charakteristik (F) für die Antriebsfrequenz des Oszillators des Aktuators abfragt, die entsprechend der Fahrgeschwindigkeit des Fahrzeugs vorbestimmt ist.

3. Die Vorrichtung nach Anspruch 2, wobei die Charakteristik für die Antriebsfrequenz des Oszillators basierend auf der Fahrgeschwindigkeit des Fahrzeugs und dem Luftwiderstand an dem Fahrzeug vorbestimmt ist.

4. Verfahren zum Reduzieren vom Fahrzeugluftwiderstand eines Fahrzeugs (12) mit einer Vorrichtung nach Anspruch 1, wobei das Verfahren die Schritte aufweist:
Bestimmen einer Antriebsfrequenz des Oszillators des Aktuators basierend zumindest auf einer Fahrgeschwindigkeit des Fahrzeugs (12a);
Antreiben des Oszillators des Aktuators basierend auf der bestimmten Antriebsfrequenz, und
Ausstoßen der Luft aus der Öffnung (16a1) des Aktuators (16) stromab und in der Nähe des Ablösungspunkts der Grenzschicht (C).

5. Das Verfahren nach Anspruch 4, wobei der Schritt zum Bestimmen die Antriebsfrequenz des Oszillators des Aktuators bestimmt, indem die Charakteristik für die Antriebsfrequenz des Oszillators des Aktuators abgefragt wird, die entsprechend der Fahrgeschwindigkeit des Fahrzeugs vorbestimmt ist.

6. Das Verfahren nach Anspruch 5, wobei die Charakteristik für die Antriebsfrequenz des Oszillators basierend auf der Fahrgeschwindigkeit des Fahrzeugs und dem Luftwiderstand an dem Fahrzeug vorbestimmt ist.

## Revendications

1. Appareil (10) pour réduire la traînée aérodynamique d'un véhicule comportant
un actionneur de type jet synthétique (16) installé dans un véhicule (12) et qui commande périodiquement un oscillateur (16b2) relié à une membrane (16b1) déployée dans une cavité (16c) pour faire vibrer la membrane et pour éjecter/aspirer de l'air à travers un orifice (16a1) dans la cavité, dans lequel
l'orifice (16a1) de l'actionneur (16) est positionné de manière à aligner une direction d'éjection de l'air éjecté à partir de l'orifice (16a1) parallèlement à la direction de l'écoulement d'air (B) le long de la carrosserie de véhicule (12a) ;
un dispositif de détermination de fréquence de commande (20b2) qui détermine une fréquence de commande de l'oscillateur de l'actionneur sur la base au moins d'une vitesse de déplacement du véhicule ; et
un dispositif de commande d'oscillateur (20b3) qui commande l'oscillateur de l'actionneur sur la base de la fréquence de commande déterminée,
**caractérisé en ce que**
l'orifice (16a1) de l'actionneur (16) est positionné en aval et à proximité d'un point de séparation d'une couche de frontière (C) formée sur une surface de paroi arrondie de la carrosserie de véhicule (12a), et l'orifice (16a1) s'ouvre dans cette surface de paroi arrondie de la carrosserie de véhicule (12a) de manière à former un angle aigu avec celle-ci.

2. Appareil selon la revendication 1, dans lequel le dispositif de détermination de fréquence de commande détermine la fréquence de commande de l'oscillateur de l'actionneur en récupérant une caractéristique (F) pour la fréquence de commande de l'oscillateur de l'actionneur prédéterminée correspondant à la vitesse de déplacement du véhicule.

3. Appareil selon la revendication 2, dans lequel la caractéristique pour la fréquence de commande de l'oscillateur est prédéterminée sur la base de la vitesse de déplacement du véhicule et de la traînée aérodynamique sur le véhicule.

4. Procédé pour réduire la traînée aérodynamique de véhicule d'un véhicule (12) comportant un appareil selon la revendication 1, dans lequel le procédé comprend les étapes :
de détermination d'une fréquence de commande de l'oscillateur de l'actionneur sur la base au moins d'une vitesse de déplacement du véhicule (12a) ;
de commande de l'oscillateur de l'actionneur sur la base de la fréquence de commande déterminée ; et
d'éjection de l'air à partir de l'orifice (16a1) de l'actionneur (16) en aval et à proximité du point de séparation de la couche de frontière (C).

5. Procédé selon la revendication 4, dans lequel l'étape de détermination détermine la fréquence de commande de l'oscillateur de l'actionneur en récupérant une caractéristique pour la fréquence de commande de l'oscillateur de l'actionneur prédéterminée correspondant à la vitesse de déplacement du véhicule.

6. Procédé selon la revendication 5, dans lequel la caractéristique pour la fréquence de commande de l'oscillateur est prédéterminée sur la base de la vitesse de déplacement du véhicule et de la traînée aérodynamique sur le véhicule.
